# FASCICULE DE BREVET EUROPEEN

(11) **EP 3 308 232 B1**
(45) Date de publication et mention de la délivrance du brevet: **05.01.2022**
(21) Numéro de dépôt: 16741082.8
(22) Date de dépôt: 15.06.2016
(51) Int. Cl.: G05D 1/00, G05D 1/10, B64C 39/02, B64F 5/60

(54) **SYSTÈME ET PROCÉDÉ D'INSPECTION AUTOMATIQUE DE SURFACE**
SYSTEM UND VERFAHREN ZUR AUTOMATISCHEN PRÜFUNG VON OBERFLÄCHEN
SYSTEM AND METHOD FOR AUTOMATICALLY INSPECTING SURFACES

(30) Priorité: 15.06.2015 FR 1555452
(43) Date de publication de la demande: 18.04.2018
(73) Titulaire: Donecle, 31670 Labège (FR)
(72) Inventeur: CLAYBROUGH, Matthieu, 31300 Toulouse (FR)
(74) Mandataire: Bringer, Mathieu
(86) Numéro de dépôt international: PCT/FR2016/051448
(87) Numéro de publication internationale: WO 2016/203151

(56) Documents cités:
- WO-A1-2015/059241
- US-A1- 2010 103 260
- US-A1- 2014 278 221
- David Lattanzi: "A COMPUTATIONAL FRAMEWORK FOR NEXT-GENERATION INSPECTION IMAGING", , 1 décembre 2013 (2013-12-01), XP055267638, Extrait de l'Internet: URL:https://dlib.lib.washington.edu/resear chworks/bitstream/handle/1773/23578/Lattan zi_washington_0250E_11891.pdf?sequence=1 [extrait le 2016-04-21]
- TEIXEIRA JOAO MARCELO ET AL: "Teleoperation Using Google Glass and AR, Drone for Structural Inspection", 2014 XVI SYMPOSIUM ON VIRTUAL AND AUGMENTED REALITY, IEEE, 12 mai 2014 (2014-05-12), pages 28-36, XP032653509, DOI: 10.1109/SVR.2014.42

## Description

### 1. Domaine technique de l'invention

L'invention concerne un système et un procédé d'inspection automatique d'objets de grandes dimensions. En particulier, l'invention concerne la détection et la localisation de défauts sur des surfaces difficiles d'accès de ces objets de grandes dimensions.

### 2. Arrière-plan technologique

Le domaine technique de l'invention concerne la détection et la localisation de défauts visibles à l'œil humain sur de larges surfaces, telles que les surfaces extérieures de grands objets, par exemple des aéronefs, des navires, des trains, des véhicules automobiles, des bâtiments ou des ouvrages d'arts. D'une manière générale, dans tout le texte, on désigne par objet toute chose concrète perceptible par la vue et le toucher, fabriquée par l'homme et destinée à un certain usage. Les grands objets, c'est-à-dire les objets dont les dimensions, l'encombrement et/ou poids ne leur permettent pas d'être portés par un être humain, présentent généralement des surfaces difficiles d'accès, par exemple les portions en hauteur des bâtiments ou ouvrages d'arts, la coque extérieure de grands navires, la structure d'une plate-forme pétrolière ou la partie supérieure des rames de trains ou des fuselages et voilures d'aéronef. La détection et la localisation de défauts visibles à l'œil sur ce type de grands objets présentent ainsi plusieurs problématiques, notamment des problématiques d'accès visuel aux surfaces, de détection des défauts et de localisation des défauts dans un référentiel lié à l'objet. Les défauts à détecter sont par exemple un impact de foudre, grêle, oiseau, débris, ou des défauts de corrosion, érosion, coulure de peinture, fissures, etc.

La détection et la localisation de défauts s'effectue par une inspection des surfaces des objets. Plusieurs systèmes et procédés d'inspection ont été proposés pour répondre à ces problématiques.

Généralement, les inspections actuelles sont effectuées par des opérateurs humains. Des équipements spécifiques sont utilisés pour permettre l'accès visuel aux surfaces par ces opérateurs, par exemple l'utilisation de nacelles élévatrices, d'échafaudages, etc. Pour les surfaces les plus difficiles d'accès, l'opérateur peut par exemple également devoir utiliser des jumelles ou des moyens optiques équivalents.

Les opérateurs humains sont formés spécifiquement pour détecter les défauts en inspectant les surfaces. La détection de ces défauts repose donc sur l'expérience et le ressenti des opérateurs. Une fois un défaut détecté, l'opérateur est chargé de localiser ces défauts, c'est-à-dire de répertorier l'emplacement du défaut détecté de façon absolue ou plus couramment de façon relative à un ou plusieurs repères présents sur l'objet. Ces repères peuvent être par exemple selon le type d'objet inspecté des fenêtres ou hublots, des éléments structurels tels que des câbles, poteaux, colonnes, cadres, longerons, lisses, des marqueurs textuels, des éléments distinctifs particuliers, etc. La localisation d'un défaut est ainsi effectuée en déterminant dans un premier temps au moins un repère de référence, puis en mesurant dans un second temps la position du défaut par rapport à chaque repère de référence.

Ces inspections effectuées par un ou plusieurs opérateurs humains ont toutefois plusieurs inconvénients.

Concernant l'accès visuel aux surfaces, l'installation des équipements spécifiques tels que des échafaudages est longue et coûteuse, et ne permet pas systématiquement un accès aisé aux surfaces à inspecter. L'utilisation de jumelles ou de moyens optiques équivalents pour pallier cet inconvénient n'est pas satisfaisante car cela réduit l'efficacité de l'inspection. En outre, les équipements spécifiques entrainent généralement des risques accrus de sécurité pour l'opérateur, notamment des risques de chutes, d'écrasement ou tout autre risque dû à l'utilisation des équipements spécifiques tels que nacelles ou échafaudages. Les équipements spécifiques entrainent aussi des risques pour l'objet, notamment des risques de collision pouvant entrainer des dégradations. Selon la fragilité de l'objet, ces dégradations peuvent entrainer de fortes répercussions, telles qu'une immobilisation (pour les véhicules et aéronefs), des réparations coûteuses voire un arrêt définitif d'exploitation. Ces inconvénients et risques sont d'autant plus importants que le nombre d'opérateurs est élevé.

La détection effectuée par les opérateurs est en outre imparfaite car un opérateur peut oublier de balayer visuellement une portion de la surface, notamment si la surface est difficile d'accès. Il peut aussi traiter inégalement les surfaces selon qu'elles sont facilement accessibles ou non. Enfin, la subjectivité de chaque opérateur peut entrainer une classification différente des éléments perçus (par exemple entre défauts graves, insignifiants, usure normale ou tâches), ce qui peut conduire à ignorer ou ne détecter que tardivement certains défauts. De plus, les opérateurs doivent être formés spécifiquement à l'inspection, ce qui réduit le nombre d'opérateurs susceptibles de procéder à l'inspection et nécessite une gestion supplémentaire de la disponibilité et du coût d'une équipe d'opérateurs formés.

Enfin, les techniques de localisation peuvent entrainer des erreurs, notamment au niveau du choix et de l'identification des repères de référence, par exemple si ce choix nécessite un comptage d'un grand nombre d'éléments répétitifs (hublots, fenêtres, colonnes, etc.), à laquelle s'ajoutent les erreurs classiques de mesures à partir du ou des repères.

Les inspections effectuées avec les systèmes et procédés existants rencontrent en outre une problématique supplémentaire de rapidité. Les inspections actuelles nécessitent généralement l'arrêt de l'exploitation de l'objet pendant une longue période. Pour améliorer la vitesse d'inspection, il est nécessaire d'augmenter le nombre d'opérateurs en charge de cette inspection, ce qui génère notamment des coûts supplémentaires et accroit les risques énoncés précédemment.

Des solutions ont été proposées pour pallier ces inconvénients. Par exemple, l'utilisation d'un robot roulant équipé de moyens optiques permet d'améliorer la détection et la localisation des défauts et ainsi limiter la subjectivité de la détection et les erreurs de localisations. Toutefois, la problématique de l'accès visuel est toujours présente et le procédé est peu rapide, l'intervention d'un opérateur étant nécessaire à chaque détection. Une autre solution consiste à placer l'objet à inspecter dans un hangar équipé d'une pluralité de caméras pouvant inspecter la surface de l'objet. Ce système est néanmoins non utilisable sur les bâtiments et les ouvrages d'art, n'est pas déplaçable et est peu modulable. En particulier, un tel système nécessite d'amener l'objet à inspecter, par exemple un aéronef, jusque dans le hangar ce qui est coûteux et complexe. Le document David Lattanzi: "A COMPUTATIONAL FRAMEWORK FOR NEXT-GENERATION INSPECTION IMAGING",, 1 décembre 2013 (2013-12-01), XP055267638, décrit un système d'inspection d'une surface d'un objet destiné à détecter des défauts ou dommages sur cette surface. Le système comprend un ou plusieurs robots. Chaque robot possède un ou plusieurs capteurs. Les données issues des capteurs permettent la génération d'un modèle 3D sur lequel apparaissent les images relevées afin d'y détecter Les défauts.

Les inventeurs ont donc cherché à proposer un système et un procédé d'inspection qui résout au moins certains des inconvénients des systèmes et procédés connus.

### 3. Objectifs de l'invention

L'invention vise à pallier au moins certains des inconvénients des systèmes et procédés d'inspection de surfaces connus.

En particulier, l'invention vise à fournir, dans au moins un mode de réalisation de l'invention, un système et un procédé d'inspection permettant de limiter le nombre d'opérateurs humains nécessaires.

L'invention vise aussi à fournir, dans au moins un mode de réalisation, un système et un procédé d'inspection permettant une inspection des surfaces difficiles d'accès sans la nécessité de mettre en œuvre des équipements spécifiques tels que des échafaudages.

L'invention vise aussi à fournir, dans au moins un mode de réalisation de l'invention, un système et un procédé d'inspection permettant une inspection rapide d'une grande surface.

L'invention vise aussi à fournir, dans au moins un mode de réalisation, un système et un procédé d'inspection permettant une inspection par des opérateurs humains peu ou non formés.

L'invention vise aussi à fournir, dans au moins un mode de réalisation, un système et un procédé d'inspection permettant une meilleure localisation des défauts sur la surface.

L'invention vise aussi à fournir, dans au moins un mode de réalisation, un système et un procédé d'inspection permettant une répétabilité accrue des inspections et de la détection de défauts.

### 4. Exposé de l'invention

Pour ce faire, l'invention concerne un système d'inspection automatique d'une surface d'un objet de type aéronef, véhicule de transport, bâtiment ou ouvrage d'art, ladite surface étant susceptible de présenter un défaut, caractérisé en ce qu'il comprend une flotte comprenant au moins un robot volant, chaque robot volant comprenant :
- un module d'acquisition d'images d'au moins une portion de la surface à inspecter, et
- un module de traitement des images acquises adapté pour fournir une information représentative de l'état de chaque portion de surface inspectée, dite résultat du traitement,
le système d'inspection automatique comprenant en outre un module de gestion de la flotte de robots, le module de gestion étant adapté pour déterminer, à partir d'un modèle de la surface à inspecter, un ensemble d'instructions de déplacement et d'instructions d'acquisition d'images à chaque robot de la flotte.

Un système d'inspection automatique selon l'invention permet donc une inspection par le biais d'un ou plusieurs robots volants (communément appelés drones) : le système d'inspection réduit donc fortement le nombre d'opérateur humains nécessaires, car chaque robot volant de la flotte inspecte une portion de la surface de l'objet à inspecter. La quantité de matériel nécessaire est ainsi réduite, ainsi que les risques de sécurité pour les opérateurs.

De plus, la capacité des robots volants à se mouvoir dans les airs permet d'accéder facilement à des portions de surface de l'objet difficile d'accès, par exemple la partie supérieure d'un aéronef ou d'un train. Ces portions bénéficient ainsi d'une inspection de qualité comparable aux portions plus faciles d'accès.

L'utilisation d'une flotte de robots volants permet d'améliorer la vitesse d'inspection, notamment sur de très grandes surfaces, en utilisant un nombre de robots volants adapté à la surface à inspecter. Alors que l'encombrement important des équipements spécifiques tels que nacelles et échafaudages des systèmes antérieurs limitait le nombre d'opérateurs pouvant effectuer une inspection simultanément, l'encombrement faible des robots volants permet d'utiliser un grand nombre de ces robots pour effectuer une inspection plus rapide. De plus, le système est léger, facilement transportable et donc mobile, c'est-à-dire qu'il peut être déplacé jusqu'à l'objet et ne nécessite pas le déplacement de l'objet dans un lieu particulier.

Le traitement des données acquises par le module d'acquisition du robot volant, et notamment le traitement d'au moins une image d'une portion de la surface inspectée, est effectué dans un module de traitement embarqué dans le robot volant, ce qui permet d'accélérer l'inspection et la détection des défauts, de limiter le nombre d'opérateurs humains nécessaires à l'inspection et d'effectuer une inspection et détection plus homogène de la surface. Le traitement permet de fournir une information représentative de l'état de la surface inspectée, et notamment de déterminer la présence d'éventuels défauts sur la surface : cette détermination n'est pas soumise à la subjectivité d'un opérateur humain, et permet donc une plus grande constance dans l'inspection. En outre, l'inspection ne nécessite plus d'opérateurs humains spécifiquement formés pour l'inspection.

L'information représentative de l'état de la surface inspectée, fournie par le module de traitement, est appelée par la suite résultat du traitement. Le résultat du traitement comprend notamment la présence ou non d'un potentiel défaut sur la portion de surface inspectée.

Grâce au traitement par chaque robot volant, un opérateur humain peu ou non formé pourra prendre connaissance des résultats du traitement et s'intéresser uniquement aux portions de la surface présentant un potentiel défaut, sans nécessiter d'inspecter visuellement la surface ou de regarder des images de toutes les portions de surface. De plus, chaque robot volant peut transmettre uniquement les résultats du traitement et non des images de la totalité de la surface, ce qui réduit la quantité de données transmises dans l'ensemble du système et permet l'utilisation d'un plus grand nombre de robots volants pour accélérer l'inspection. La charge de traitement est ainsi distribuée dans chaque robot volant.

De préférence, le robot volant est un robot de type hélicoptère ou multi-rotor (généralement quadrirotor), apte à effectuer un vol stationnaire. Ce type de robot volant permet d'effectuer des décollages et atterrissages aisés sur une surface réduite, de se déplacer à une vitesse variable, notamment à une vitesse lente permettant une meilleure précision de localisation et plus de sécurité, et est capable de s'arrêter et de changer de direction voire de partir dans une direction opposée en cas de présence d'obstacle sur sa trajectoire. Le vol stationnaire ou à vitesse lente permet en outre de faciliter l'acquisition d'images et d'améliorer la qualité des images acquises.

Avantageusement et selon l'invention, la flotte comprend entre un et dix robots volants. De préférence, la flotte comprend trois robots volants, permettant un bon compromis entre vitesse d'exécution, coût et réduction des risques de collision entre robots volants.

Le module de gestion permet une programmation centralisée de l'inspection par la détermination d'instructions à chaque robot de la flotte, en fonction par exemple du nombre de robots disponibles dans la flotte, du type d'objet à inspecter, de la taille de la surface à inspecter, du temps d'inspection, etc. Chaque instruction détermine une tâche à exécuter par chaque robot. Les robots de la flotte sont ainsi autopilotés en exécutant les tâches qui leur sont attribuées. Ils ne nécessitent donc pas d'opérateurs humains pour les contrôler, réduisant la nécessité de formation des opérateurs, ainsi que les risques d'erreur de pilotage pouvant aboutir par exemple à des collisions entre robots de la flotte ou entre un robot de la flotte et l'objet. En outre, chaque robot peut faire l'inspection sans nécessité de contact visuel entre un opérateur humain et chaque robot. Ainsi, chaque robot, en particulier un module de commande de chaque robot, exécute automatiquement les tâches y compris celles de déplacements et permet donc au robot de se mouvoir de façon autonome, sans besoin de télépilote ou station de contrôle.

De préférence, le module de gestion détermine les instructions de sorte à ce que l'inspection soit effectuée en un temps minimal en fonction du nombre de robots de la flotte.

Selon des variantes de l'invention, le module de gestion peut être embarqué dans un robot de la flotte ou compris dans un dispositif de gestion indépendant, par exemple un ordinateur, ou réparti entre différents robots de la flotte.

De préférence, dans les variantes où le module de gestion est compris dans un dispositif de gestion indépendant des robots de la flotte, le dispositif de gestion comprend une interface homme/machine permettant une interaction avec un opérateur humain.

Avantageusement et selon l'invention, le module d'acquisition d'images d'au moins un robot de ladite flotte comprend au moins une caméra adaptée pour acquérir des images dans le spectre de la lumière visible.

Selon cet aspect de l'invention, la caméra permet au système d'effectuer une inspection visuelle comme le ferait un opérateur humain. Le système effectue un traitement d'image sur une image dans le spectre de la lumière visible, dite image visible, permettant l'utilisation de techniques connues, efficaces et éprouvées de traitement d'images visibles.

Avantageusement, un système selon l'invention comprend un dispositif de présentation des résultats de chaque traitement effectué par le module de traitement de chaque robot de la flotte, et chaque robot de la flotte comprend un module de communication adapté pour transmettre des résultats de chaque traitement au dispositif de présentation.

Selon cet aspect de l'invention, chaque robot volant transmet les résultats des traitements effectués sur les images acquises au dispositif de présentation afin qu'un opérateur humain puisse les interpréter. Les résultats transmis par chaque robot de la flotte étant représentatifs de l'état de la surface inspectée, ils permettent notamment de proposer une classification des potentiels défauts détectés, et par exemple d'afficher sur un écran du dispositif de présentation l'image acquise, le résultat associé et une classification du potentiel défaut, ou de générer un rapport comprenant la liste des potentiels défauts détectés.

Avantageusement, dans un mode de réalisation où le module de gestion est compris dans un dispositif de gestion, le dispositif de gestion et le dispositif de présentation sont agencés dans un dispositif de contrôle. Les fonctions du module de gestion et du dispositif de présentation sont alors réunies dans un seul et même dispositif.

Avantageusement, le dispositif de contrôle comprend une interface homme/machine adaptée pour afficher un modèle 3D de la surface à inspecter et pour afficher une représentation d'une position en temps réel de chaque robot de la flotte par rapport à la surface à inspecter.

Selon cet aspect de l'invention, l'interface homme/machine permet à un opérateur humain de voir la position de chaque robot volant par rapport à l'objet et à sa surface, de voir les potentiels défauts affichés sur le modèle 3D, ainsi qu'éventuellement d'intervenir sur les robots volants si nécessaire, pour effectuer un arrêt d'urgence par exemple.

Avantageusement et selon l'invention, chaque robot de la flotte comprend un module de localisation, adapté pour associer à chaque résultat du traitement une localisation de ce résultat du traitement par rapport à un référentiel relatif à la surface à inspecter.

Selon cet aspect de l'invention, le système permet une localisation plus précise des résultats du traitement, et donc des potentiels défauts, que la localisation par un opérateur humain selon l'art antérieur. La localisation des résultats est déterminée par chaque robot de la flotte en fonction de la localisation dudit robot et des paramètres du module d'acquisition de l'image à l'instant de l'acquisition de l'image.

Selon une variante de l'invention, le module de traitement des images permet de reconnaitre des éléments de l'objet dont la localisation est connue, permettant ainsi d'affiner la localisation des résultats.

Si le système d'inspection comprend un dispositif de présentation, celui-ci est adapté pour présenter chaque résultat et la localisation associée audit résultat.

Avantageusement et selon l'invention, chaque robot de la flotte comprend un module d'urgence adapté pour détecter une panne du robot et, à partir d'un ensemble de tâches d'urgence déterminées en fonction d'une position du robot de la flotte par rapport à l'objet, ledit robot de la flotte est apte à exécuter au moins une tâche d'urgence en cas de panne.

Selon cet aspect de l'invention, une manœuvre de secours est déterminée en permanence, et le robot exécutera cette manœuvre de secours en cas de panne, par exemple perte de connexion avec un module de gestion, panne d'un module de localisation, panne d'un moteur, etc. Les manœuvres d'urgence permettent d'éviter la dégradation de l'objet dont la surface est inspectée, notamment lorsque cette surface est fragile (aéronef par exemple). Les tâches d'urgence ont généralement pour but de s'éloigner de l'objet, et dépendent de la localisation du robot par rapport à l'objet. L'ensemble des tâches d'urgence est déterminé, selon plusieurs variantes de l'invention, soit par le module de gestion, soit par chaque robot. Dans le cas où chaque robot détermine l'ensemble des tâches d'urgence, chaque robot transmet l'ensemble des tâches au module de gestion pour qu'il puisse déterminer si un robot risque d'entrer en collision avec un autre du fait de ces tâches.

Avantageusement et selon l'invention, chaque robot de la flotte comprend un module mémoire tampon, adapté pour stocker une pluralité de résultats du traitement.

Selon cet aspect de l'invention, les résultats du traitement peuvent être stockés en attendant une transmission vers un système de sauvegarde externe, par exemple compris dans le dispositif de présentation. De plus, en cas de panne du robot, les résultats stockés dans le module mémoire tampon peuvent être récupérés manuellement s'ils n'ont pas été transmis.

Avantageusement et selon l'invention, chaque robot de la flotte comprend un module de détection d'obstacle, chaque robot de la flotte étant adapté pour exécuter une tâche d'évitement d'au moins un obstacle détecté par le module de détection d'obstacle.

Selon cet aspect de l'invention, chaque robot volant est adapté pour modifier son déplacement en cas de détection d'obstacle.

De préférence, si un module de détection d'obstacle détecte un obstacle, chaque robot de la flotte est adapté pour transmettre la position dudit obstacle aux autres robots de la flotte. Ainsi, l'information concernant la position de l'obstacle est partagée et les robots de la flotte peuvent intervenir en conséquence, en modifiant leur trajectoire par exemple.

Avantageusement et selon l'invention, la flotte comprend au moins un robot roulant, chaque robot roulant comprenant :
- un module d'acquisition d'images d'au moins une portion de la surface à inspecter, et
- un module de traitement des images acquises adapté pour fournir une information représentative de l'état de chaque portion de la surface inspectée, dite résultat du traitement.

Selon cet aspect de l'invention, la flotte comprenant au moins un robot volant peut être complétée par un robot roulant comprenant les mêmes modules, de façon à accéder à des zones difficiles d'accès aux robots volants, par exemple sous le fuselage d'un aéronef.

L'invention concerne également un procédé d'utilisation d'un système d'inspection automatique selon l'invention, caractérisé en ce qu'il comprend :
- une étape de détermination par le module de gestion d'un ensemble d'instructions attribuées à chaque robot de la flotte,
- une étape d'exécution des tâches par chaque robot de la flotte, lesdites tâches comprenant au moins une acquisition par le module d'acquisition d'une image d'une portion de la surface à inspecter, et comprenant au moins un traitement par le module de traitement de ladite image de sorte à détecter un potentiel défaut sur la surface à inspecter,
- une étape de transmission du résultat dudit traitement de chaque robot à un dispositif de présentation,
- une étape de présentation dudit résultat du traitement à un opérateur humain.

Un procédé d'utilisation selon l'invention permet donc l'utilisation d'un système d'inspection selon l'invention en répartissant des tâches à chaque robot de la flotte en fonction du modèle de la surface à inspecter de façon à optimiser la vitesse d'inspection de la surface. Chaque robot a par exemple une partie de la surface à inspecter.

L'étape de présentation du résultat transmis par un des robots de la flotte est par exemple un affichage sur un écran, ou la génération d'un rapport, etc.

Avantageusement et selon l'invention, l'étape de transmission du résultat dudit traitement par chaque robot est exécutée après chaque traitement par un module de traitement.

Selon cet aspect de l'invention, un résultat est transmis directement après chaque traitement, permettant ainsi d'obtenir au fur et à mesure les informations sur la présence de potentiels défauts, sans attendre la fin de l'inspection. La transmission est effectuée dès que possible, c'est-à-dire en prenant en compte les différents temps de traitement et la disponibilité d'un canal de transmission affecté à la transmission si celui-ci est partagé entre plusieurs robots volants.

L'invention concerne également un procédé d'inspection automatique d'une surface d'un objet de type aéronef, véhicule de transport, bâtiment ou ouvrage d'art, ladite surface étant susceptible de présenter un défaut, caractérisé en ce qu'il comprend :
- une étape d'acquisition d'images d'au moins une portion de la surface à inspecter par chaque robot volant d'une flotte de robots comprenant au moins un robot volant, et
- une étape de traitement des images acquises pour fournir une information représentative de l'état de chaque portion de surface inspectée, dite résultat du traitement,
- une étape de détermination, à partir d'un modèle de la surface à inspecter, d'un ensemble d'instructions de déplacement et d'instructions d'acquisition d'images à chaque robot de la flotte.

Avantageusement, le procédé d'inspection selon l'invention est mis en œuvre par le système d'inspection selon l'invention.

Avantageusement, le système d'inspection selon l'invention met en œuvre le procédé d'inspection selon l'invention.

L'invention concerne également un système d'inspection automatique, un procédé d'utilisation dudit système et un procédé d'inspection automatique caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique du système d'inspection automatique selon un mode de réalisation de l'invention,
- la figure 2 est une vue schématique d'un robot d'une flotte d'un système d'inspection automatique selon un mode de réalisation de l'invention,
- la figure 3 est une vue schématique du procédé d'inspection automatique selon un mode de réalisation de l'invention,
- la figure 4 est une vue schématique d'une flotte de robots d'un système d'inspection automatique selon un mode de réalisation de l'invention dans lequel l'objet est un aéronef,

### 6. Description détaillée d'un mode de réalisation de l'invention

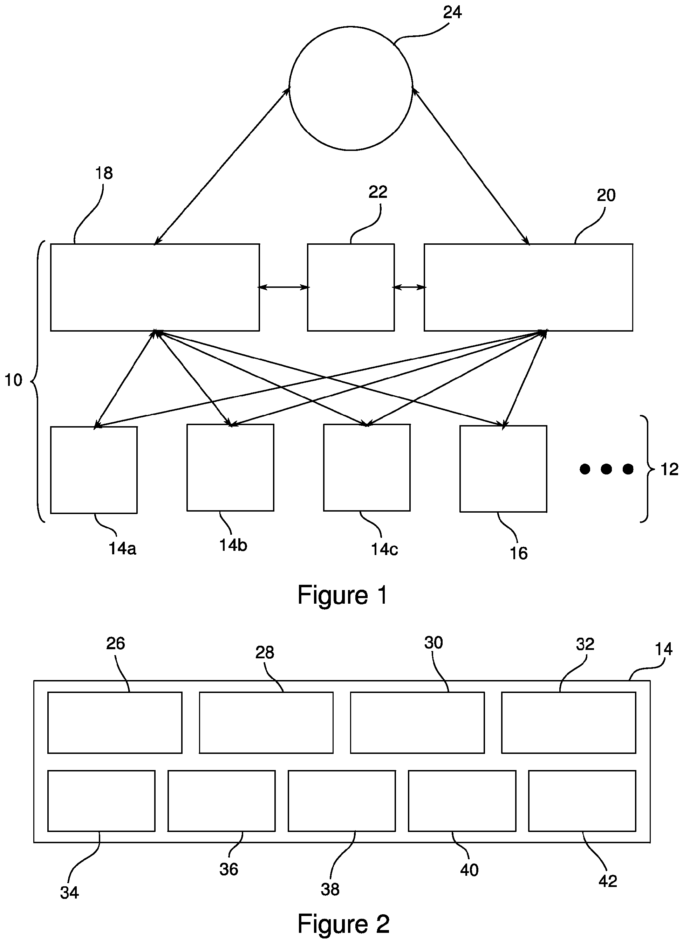

La figure 1 représente schématiquement un système 10 d'inspection automatique d'une surface d'un objet de type aéronef, véhicule de transport (véhicule ferroviaire, véhicule automobile, etc.), bâtiment, ouvrage d'art, ou tout autre objet de grandes dimensions et dont la surface à inspecter est grande, selon un mode de réalisation de l'invention. Le système 10 d'inspection a pour objectif de détecter des potentiels défauts sur la surface de l'objet. Le système 10 d'inspection comprend une flotte 12 comprenant au moins un robot volant, ici trois robots 14a, 14b, 14c volants. La flotte 12 peut aussi comprendre un ou plusieurs robots d'un autre type, par exemple un robot 16 roulant, ou tout autre robot adapté à l'objet à inspecter, par exemple un robot sous-marin pour une inspection d'une plate-forme pétrolière. Les robots 14a, 14b, 14c volants sont appelés couramment drones ou aéronefs sans pilote (UAV pour *Unmanned Aerial Vehicle* en anglais) et sont de type hélicoptère, quadrirotor ou multirotor capable d'effectuer un vol stationnaire. Pour réduire les risques d'endommager l'objet en cas de collision avec un robot de la flotte 12, ceux-ci sont équipés de pare-chocs.

Chaque robot 14a, 14b, 14c, 16 de la flotte 12 est adapté pour communiquer avec d'une part un module 18 de gestion et d'autre part avec un dispositif 20 de présentation. Dans un autre mode de réalisation non représenté, le module 18 de gestion est embarqué dans un des robots de la flotte 12.

Le module 18 de gestion et le dispositif 20 de présentation sont reliés, dans ce mode de réalisation, à un serveur 22 web accessible via un réseau de télécommunication. En outre, le module 18 de gestion et le dispositif 20 de présentation peuvent être embarqués dans un même dispositif de contrôle, par exemple un ordinateur ou une tablette.

Un opérateur 24 humain peut interagir via une ou plusieurs interfaces homme/machine avec le module 18 de gestion et le dispositif 20 de présentation. L'interface contient une visualisation 3D interactive incluant un modèle 3D de l'objet à inspecter ainsi que la position temps réel des robots 14a, 14b, 14c, 16 et des éventuels potentiels défauts trouvés.

La figure 2 représente schématiquement un robot 14 de la flotte 12 selon un mode de réalisation de l'invention.

Le robot 14 comprend un module 26 d'acquisition d'images de la surface à inspecter et un module 28 de traitement des images acquises. Le module 26 d'acquisition d'images comprend au moins un capteur, par exemple une caméra permettant l'acquisition d'images dans le spectre de la lumière visible. Pour améliorer la qualité de l'image acquise, le module d'acquisition peut aussi comprendre un dispositif d'éclairage dans le spectre de la lumière visible.

En outre, dans ce mode de réalisation de l'invention, le robot 14 comprend :
- un module 30 d'urgence, adapté pour détecter des pannes,
- un module 32 de communication avec le module 18 de gestion et le dispositif 20 de présentation,
- un module 34 de commande du robot, adapté pour traiter des instructions de pilotage du robot provenant du module 18 de gestion ou des autres modules embarqués dans le robot 14,
- un module 36 de localisation,
- un module 38 de stabilisation et de guidage du robot, contrôlant notamment des moteurs du robot 14 en fonction de commandes de déplacement transmises par le module 34 de commande,
- un module 40 de mémoire tampon,
- un module 42 de détection d'obstacle.

Ces modules sont présents par exemple sous la forme de composants électroniques, plusieurs modules pouvant être réunis dans le même composant électronique et un module pouvant être composé d'une pluralité de composants électroniques en interaction. Les modules peuvent aussi être implémentés sous forme de programme d'ordinateur exécutés par un ou plusieurs composants électroniques, par exemple un processeur d'un ordinateur, microcontrôleur, DSP (*Digital Signal Processor* en anglais), FPGA (*Field Gate Programmable Array* en anglais), etc.

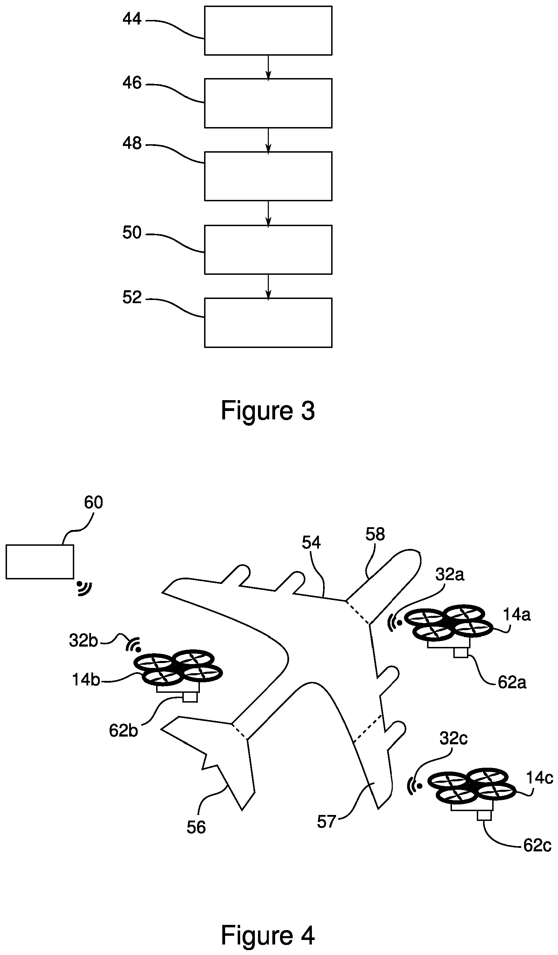

La figure 3 représente un procédé d'inspection automatique de la surface de l'objet selon un mode de réalisation de l'invention. Le procédé est mis en œuvre par le système 10 d'inspection automatique selon le mode de réalisation décrit précédemment.

La première étape du procédé est une étape 44 de paramétrage de l'inspection par l'opérateur 24 humain sur le module de gestion, via une interface homme/machine. L'opérateur 24 humain a accès à plusieurs paramètres, par exemple :
- l'objet à inspecter : l'opérateur 24 humain choisit un modèle, par exemple un modèle 3D, de la surface de l'objet à inspecter parmi une sélection de modèles prédéfinis, accessibles par exemple sur le serveur 22 web ;
- environnement de l'objet : l'opérateur 24 humain peut indiquer si l'objet est situé en extérieur, dans un hangar, etc. afin de déterminer si les robots sont soumis à des contraintes particulières sur leur déplacement autour de l'objet (par exemple des obstacles) ;
- détermination de la flotte 12 : nombre de robots utilisés et leur type (volant ou non, équipés de certains types de modules d'acquisition ou de capteurs, etc.)
- mission à effectuer : inspection rapide, minutieuse, partielle, etc.

Une fois les paramètres validés par l'opérateur 24 humain, le procédé d'inspection passe à une étape 46 de détermination d'un ensemble d'instructions. Cette étape 46 de détermination est exécutée par le module 18 de gestion. Elle consiste en la détermination, en fonction des paramètres choisis par l'opérateur 24 humain lors de l'étape précédente et notamment du modèle de la surface à inspecter, d'un ensemble d'instructions de déplacement et d'instructions d'acquisition d'images qui sont attribuées à chaque robot de la flotte 12. L'inspection est ainsi décomposée en différentes tâches qui sont traduites en instructions à destination des robots de la flotte 12, permettant de couvrir toute la surface à inspecter selon le modèle de ladite surface. Les instructions de déplacement contiennent des consignes pour définir la trajectoire tridimensionnelle ainsi que l'orientation des robots volants. Ces instructions de déplacement sont par exemple un déplacement d'un robot volant d'un point A (de coordonnées (Ax, Ay, Az)) à un point B (de coordonnées (Bx, By, Bz)) avec une orientation constante. Les instructions d'acquisition d'image d'une surface de l'objet au point B comprennent par exemple des consignes relatives au pilotage du module d'acquisition d'image, notamment son orientation dans l'espace, les réglages de son système optique et de capture, une consigne de déclenchement. Les instructions peuvent être par la suite un traitement de ladite image acquise, un déplacement vers un nouveau point C (de coordonnées (Cx, Cy, Cz)), une nouvelle acquisition d'image, etc. Ainsi, le module 18 de gestion permet de générer à partir d'une surface de référence des instructions pour une flotte de robots volants leur permettant de réaliser une inspection de façon automatique.

Les instructions attribuées à chaque robot de la flotte 12 sont transmises auxdits robots par le module 18 de gestion pour permettre l'exécution des tâches liées à ces instructions dans une étape 48 d'exécution des tâches par chaque robot de la flotte 12. Selon les modes de réalisation, chaque robot reçoit l'intégralité des instructions qui lui sont attribuées avant l'étape 48 d'exécution, ou bien seulement une première partie des instructions, les instructions suivantes étant envoyées durant l'étape 48 d'exécution. Dans les deux cas, le module 18 de gestion peut modifier les tâches en cours d'exécution par l'envoi de nouvelles instructions en cas de changement de situation, par exemple attribuer une nouvelle portion de surface à un robot si le robot devant initialement acquérir une image de cette portion de surface est en panne. Les robots de la flotte 12 peuvent aussi transmettre des informations au module 18 de gestion concernant leur statut, l'avancement de l'exécution des tâches et toute autre information pouvant aboutir à un envoi de nouvelles instructions par le module 18 de gestion.

Les tâches de chaque robot de la flotte 12 sont traitées par le module 34 de commande dudit robot. Notamment, le module 34 de commande effectue le stockage des instructions reçues, leur séquencement, les calculs liés à ces instructions pour déterminer les tâches associées, la commande des différents modules en fonction des tâches, le calcul du statut du robot, etc. Ainsi, le module 34 de commande exécute automatiquement les tâches y compris celles de déplacements et permet donc au robot de se mouvoir de façon autonome, sans besoin de télépilote ou station de contrôle.

Durant l'étape 48 d'exécution, chaque robot de la flotte 12 effectue au moins une acquisition d'une image via son module 26 d'acquisition et un traitement de l'image acquise via son module 28 de traitement.

L'acquisition de l'image est effectuée par un ou plusieurs capteurs du module 26 d'acquisition, permettant l'obtention de différents types d'image en fonction du capteur utilisé. Par exemple, les capteurs peuvent être des capteurs infrarouges, caméras pour le spectre visible, capteurs d'ultraviolets, ou tout autre capteur permettant de former une image d'ondes électromagnétiques ou accoustiques dans une bande de fréquence. Le capteur peut aussi être un capteur 3D, de type capteur de profondeur, capteur de profondeur temps de vol (TOF pour *Time of Flight* en anglais) ou projection de motif infrarouge, capteur stéréoscopique, etc. Enfin, un capteur peut acquérir des images d'une même portion sur plusieurs spectres de fréquence (imagerie hyperspectrale).

Le traitement de l'image par le module 28 de traitement consiste à fournir un résultat représentatif de l'état de la surface inspectée. Le module 28 de traitement détermine ainsi à partir de l'image acquise la présence d'un potentiel défaut sur la surface, par exemple par comparaison de l'image acquise avec une image plus ancienne de la même surface (récupérée sur le serveur web ou fournie par le module de gestion), détection de variation brusque de couleurs, d'aspects (finesse, grain, flou, brillance, etc.), etc.

Le module 28 de traitement utilise des algorithmes prédéfinis et préréglés. Par exemple, selon un mode de réalisation de l'invention, le module 28 de traitement met en œuvre les étapes suivantes pour chaque image :
- une première étape de normalisation de l'image qui consiste à appliquer un premier ensemble de filtres numériques réglés en fonction de paramètres de l'image visant à compenser les variations extérieures (éclairage, etc.), à réduire l'effet des perturbations (reflets, etc.), et à compenser les déformations induites par l'objectif (géométrie et éclairage),
- une seconde étape de localisation de l'image qui, à partir d'un positionnement du robot (c'est à dire la position du robot dans l'espace et l'angle d'orientation du robot), de la position et l'angle du capteur d'acquisition du module 26 d'acquisition, par exemple une caméra, et de la distance de la caméra à la surface, détermine les coordonnées dans un repère relatif à la surface de l'ensemble des points de l'image,
- une troisième étape de segmentation de l'image et l'extraction des contours de toutes les formes pouvant être des potentiels défauts, et la génération d'une sous-image contenant le potentiel défaut, aussi appelée vignette, pour chacune de ces formes. Une image peut conduire à la génération d'aucune vignette ou de plusieurs vignettes.

Le module de traitement calcule ensuite, pour chaque vignette de l'image, un ensemble de paramètres suivant des algorithmes préenregistrés puis classifie et caractérise les vignettes à partir de cet ensemble de paramètres. On peut distinguer les algorithmes qui ne nécessitent pas de données autres que la vignette et dont les paramètres calculés sont appelés descripteurs. Pour chaque paramètre, les étapes suivantes sont effectuées :
- application d'un filtre numérique,
- calcul du paramètre sur la vignette filtrée.

Le filtre est choisi en fonction du paramètre souhaité. Par exemple, le filtre numérique est un filtre gaussien pour réduire le bruit, un filtre de type gradient pour détecter les variations brusques, un filtre colorimétrique pour calculer les descripteurs sur certaines combinaisons de fréquences uniquement, et un filtre fréquentiel pour détecter certains motifs, répétitions ou textures.

Par exemple, plusieurs familles de descripteurs sont utilisées :
- des descripteurs géométriques (périmètre, plus grande dimension, plus petite dimension, ratio largeur/hauteur, nombre de cassures sur le contour, courbure moyenne du contour, etc.)
- des descripteurs portant directement sur les pixels : moments statistiques (moyenne, variance, asymétrie, kurtosis, etc) et autres opérateurs mathématiques (maximum, différence d'ordre, entropie, uniformité, etc.). Le descripteur peut également être appliqué à un sous-ensemble des pixels respectant un critère particulier, par exemple une valeur supérieure ou inférieure à un seuil prédéterminé.

En ce qui concerne l'utilisation d'autres données extérieures pour calculer le paramètre, l'algorithme comprend par exemple les étapes suivantes :
- détermination d'une vignette de référence en extrayant d'une image de référence la même zone de surface que la vignette traitée. L'image de référence peut-être une image de cette zone prise à une date antérieure (disponible par exemple sur le serveur 22 web) ou encore une image générée par un ordinateur à partir du modèle de la surface. Selon un mode de réalisation préférentiel, plusieurs images peuvent être utilisées, les paramètres sont alors calculés pour chaque image de référence,
- calcul de paramètres exprimant la différence entre la vignette acquise et chaque vignette de référence, ces paramètres étant par exemple des normes mathématiques sur la différence entre la vignette et la vignette de référence, des indices de corrélation, une comparaison d'histogrammes, etc. Ces méthodes sont généralement mises en place localement, autour de points d'intérêts de la vignette.

La dernière étape est la classification et la caractérisation de la vignette à partir de l'ensemble des paramètres calculés. La classification consiste à déterminer le type du potentiel défaut, par exemple parmi les catégories suivantes : « tache d'huile », « corrosion », « élément manquant », « impact foudre », « rayure », « pas un défaut », « inconnu », etc. La caractérisation consiste à déterminer une catégorie de la vignette parmi un ensemble prédéterminé, par exemple : « défaut acceptable, défaut non acceptable», ainsi que la taille dudit potentiel défaut.

La classification et la caractérisation peuvent être effectuées par un classifieur connu tel que classifieur linéaire, le classifieur bayésien naif, le classifieur SVM aussi appelé « Machine à Vecteurs de Support », les réseaux de neurones, etc.

Dans ce mode de réalisation, l'ensemble des vignettes classifiées comme comportant un défaut ou étant inconnues, accompagnées de leur localisation, leur classification et leur caractérisation, forment des résultats du traitement.

Selon un mode de réalisation avantageux, les résultats peuvent être transmis sur le serveur web qui a la capacité d'apprendre, c'est-à-dire d'améliorer ses algorithmes et réglages au fur et à mesure des résultats. Ce serveur web est alors à même à envoyer de nouveaux réglages plus précis au module 28 de traitement des images acquises d'une part et d'autre part à lever le doute sur les résultats classifiées avec un mauvais indice de confiance ou classifiées dans une catégorie « inconnue ».

Le résultat de ce traitement est la détection ou non d'un potentiel défaut, et éventuellement une classification du potentiel défaut en fonction de sa gravité. Le résultat de chaque traitement est stocké dans le module 40 mémoire tampon du robot 14.

Chaque résultat est associé à une localisation fournie par le module 36 de localisation. Cette localisation est exprimée selon un repère relatif à la surface à inspecter afin d'être facilement retrouvable par un opérateur humain. Le module 36 de localisation permet de déterminer le positionnement du robot 14, et d'en déduire la localisation de ce résultat par rapport à ce positionnement. Le positionnement du robot 14 est déterminé par un ou plusieurs équipements de localisation absolue, par exemple un GPS (*Global Positioning System* en anglais), un ou plusieurs équipements de localisation inertielle, par exemple par un accéléromètre, gyroscope, magnétomètre, etc., et/ou un ou plusieurs équipements de localisation relative, par exemple radar, ultrason, télémètre laser, infrarouge, traitement d'image, par rapport à des balises au sol, etc., ou une combinaison de ces équipements. La localisation du résultat est ensuite déterminée par rapport au positionnement du robot, par le module de traitement des images, comme expliqué précédemment. Le positionnement du robot et la localisation du résultat peuvent utiliser une combinaison de différentes technologies, lesquelles sont alors par exemple associées par hybridation via un filtre de Kalman, permettant une localisation plus précise du résultat.

Chaque résultat de chaque traitement et la localisation dudit résultat sont transmis par le module 32 de communication au dispositif 20 de présentation lors d'une étape 50 de transmission du résultat. Selon les modes de réalisation, le résultat peut être transmis en fin d'inspection ou bien en permanence en cours de l'inspection. Lorsqu'un résultat est transmis, le dispositif 50 de présentation envoie un acquittement (*acknowledgment* en anglais) au robot 14 qui supprime le résultat de son module 40 mémoire tampon.

Le résultat est ensuite présenté à un opérateur humain grâce au dispositif 20 de présentation lors d'une étape 52 de présentation. La présentation des résultats peut s'effectuer sous plusieurs formes et par le biais d'interfaces homme/machine de différents types, par exemple comprenant une représentation 3D du modèle ayant servi à la détermination des instructions, sur laquelle est replacé le potentiel défaut, un affichage de l'image de la surface associée au résultat sur un écran, la génération d'un rapport écrit, etc. Le rapport comprend par exemple une liste des potentiels défauts détectés, leur localisation, leur classification (type de défaut), et leur caractérisation (taille et gravité du défaut). L'opérateur peut ensuite relancer un procédé d'inspection automatique avec des nouveaux paramètres, par exemple pour inspecter de façon plus précise ou avec de nouveaux capteurs les portions où des potentiels défauts ont été détectés. Chaque résultat peut aussi être sauvegardé afin de créer un historique des inspections sur un même objet. Cet historique peut être transmis au serveur web pour une utilisation future, éventuellement dans un environnement différent (par exemple pour les aéronefs dont l'inspection peut avoir lieu dans des lieux différents), ou pour effectuer un traitement supplémentaire.

Certaines situations peuvent entrainer chaque robot de la flotte 12 à exécuter des tâches différentes de celles initialement prévues dans les instructions provenant du module de gestion.

Par exemple, le module 42 de détection d'obstacle permet la détection d'obstacle et la transmission de tâches au module 34 de commande du robot qui exécute ces tâches de sorte à éviter l'obstacle, et éventuellement le signaler à l'opérateur 24 humain via le dispositif 20 de présentation, ainsi qu'au module 18 de gestion afin qu'il puisse modifier les déplacements des autres robots de la flotte 12 si nécessaire et/ou envoyer de nouvelles instructions au robot ayant détecté l'obstacle. Le robot peut aussi informer directement les autres robots.

Le module 30 d'urgence permet aussi de transmettre des tâches d'urgence au module 34 de commande si une panne atteint le robot volant. Le module 30 d'urgence permet la détection de panne. Un ensemble de tâches d'urgence pour chaque cas de panne prévu et adapté à la position du robot par rapport à l'objet est déterminé, soit par le module 30 d'urgence, soit par le module 18 de gestion. Par exemple, dans le cas d'un aéronef à voilure fixe, un robot volant situé au-dessus d'une voilure s'écartera latéralement avant d'atterrir verticalement alors qu'un robot situé sous l'aéronef atterrira directement.

Plus précisément, l'ensemble des tâches d'urgence est mis à jour régulièrement, par exemple toutes les secondes, et permet de déterminer une suite d'instructions mise en œuvre par le robot en fonction de la situation dans laquelle il se trouve.

Les taches d'urgences correspondant à une perte ou erreur du système de localisation pour un robot situé au-dessus de l'aile d'un aéronef tiennent compte de l'erreur de position et comprennent un écartement latéral avec des marges plus importantes garantissant l'absence de contact entre le robot et l'aile. Ainsi, le module d'urgence est configuré pour détecter une grande variété de pannes et exécuter pour chacune la réponse la plus appropriée.

Les pannes pouvant être détectées par le module 30 d'urgence sont par exemple une perte de la liaison de donnée, une perte ou une erreur du positionnement du robot, une perte de puissance ou batterie trop faible, etc.

La figure 4 représente schématiquement une flotte de robots d'un système d'inspection automatique selon un mode de réalisation de l'invention mettant en œuvre un procédé d'inspection automatique selon un mode de réalisation de l'invention, dans lequel l'objet est un aéronef 54. Trois robots volants 14a, 14b, 14c sont représentés.

L'étape de détermination d'un ensemble d'instructions permet par exemple d'attribuer à chaque robot de la flotte, via des instructions de déplacement et d'acquisition d'images, des tâches relatives à une partie de la surface à inspecter. Par exemple, dans le mode de réalisation représenté, un premier robot 14a volant inspecte la surface de l'avant 58 du fuselage de l'aéronef 54, un deuxième robot 14b volant inspecte la surface de l'empennage 56 de l'aéronef 54 et un troisième robot volant 14c inspecte la surface d'une partie 57 d'une aile de l'aéronef 54.

Les robots 14a, 14b, 14c volants communiquent grâce au module 32a, 32b, 32c de communication via une transmission sans-fil avec un dispositif 60 de contrôle, comprenant le module de gestion et le dispositif de présentation, avec lequel un opérateur humain interagit afin de suivre le déroulement de l'inspection et éventuellement voir des potentiels défauts détectés par les robots 14a, 14b, 14c volants. La transmission sans-fil s'effectue via un ou plusieurs protocoles de communication connus, par exemple Zigbee (IEEE 802.15.4) pour les transmissions de commande, Wi-Fi (IEEE 802.11) pour les transmissions de données, et éventuellement un protocole radio différent (par exemple de type DSM2/DSMX dans la bande 2,4GHz) pour les transmissions de secours.

## Revendications

1. Système d'inspection automatique d'une surface d'un objet de type aéronef (54), véhicule de transport, bâtiment ou ouvrage d'art, ladite surface étant susceptible de présenter un défaut, comprenant une flotte (12) comprenant au moins un robot (14, 14a, 14b, 14c) volant, chaque robot volant comprenant :
- un module (26) d'acquisition d'images d'au moins une portion de la surface à inspecter, et
- un module (28) de traitement des images acquises adapté pour fournir une information représentative de l'état de chaque portion de surface inspectée, dite résultat du traitement,
**caractérisé en ce que**
le système d'inspection automatique comprenant en outre un module (18) de gestion de la flotte (12) de robots, le module (18) de gestion étant adapté pour déterminer, à partir d'un modèle de la surface à inspecter, un ensemble d'instructions de déplacement et d'instructions d'acquisition d'images à chaque robot (14, 14a, 14b, 14c, 16) de la flotte (12).

2. Système d'inspection automatique selon la revendication 1, **caractérisé en ce que** le module (26) d'acquisition d'images d'au moins un robot de ladite flotte comprend au moins une caméra adaptée pour acquérir des images dans le spectre de la lumière visible.

3. Système d'inspection automatique selon l'une des revendications 1 ou 2, **caractérisé en ce qu'**il comprend un dispositif (20) de présentation des résultats de chaque traitement effectué par chaque module (28) de traitement de chaque robot (14, 14a, 14b, 14c, 16) de la flotte (12), et **en ce que** chaque robot (14, 14a, 14b, 14c, 16) de la flotte (12) comprend un module (32) de communication adapté pour transmettre des résultats de chaque traitement au dispositif (20) de présentation.

4. Système d'inspection automatique selon les revendications 2 et 3 prises ensemble, **caractérisé en ce que** le module (18) de gestion et le dispositif (20) de présentation sont agencés dans un dispositif (60) de contrôle.

5. Système d'inspection automatique selon la revendication 4, **caractérisé en ce que** le dispositif (60) de contrôle comprend une interface homme/machine adaptée pour afficher un modèle 3D de la surface à inspecter et pour afficher une représentation d'une position en temps réel de chaque robot de la flotte par rapport à la surface à inspecter.

6. Système d'inspection automatique selon l'une des revendications 1 à 5, **caractérisé en ce que** chaque robot de la flotte comprend un module de localisation adapté pour associer à chaque résultat du traitement une localisation de ce résultat du traitement par rapport à un référentiel relatif à la surface à inspecter.

7. Système d'inspection automatique selon l'une des revendications 1 à 6, **caractérisé en ce que** chaque robot (14, 14a, 14b, 14c, 16) de la flotte (12) comprend un module (30) d'urgence adapté pour détecter une panne du robot et, à partir d'un ensemble de tâches d'urgence déterminées en fonction d'une position du robot de la flotte (12) par rapport à l'objet, ledit robot de la flotte (12) est apte à exécuter au moins une tâche d'urgence en cas de panne.

8. Système d'inspection automatique selon l'une des revendications 1 à 7, **caractérisé en ce que** chaque robot (14, 14a, 14b, 14c, 16) de la flotte (12) comprend un module de détection d'obstacle, chaque robot (14, 14a, 14b, 14c, 16) de la flotte (12) étant adapté pour exécuter une tâche d'évitement d'au moins un obstacle détecté par le module de détection d'obstacle.

9. Système d'inspection automatique selon l'une des revendications 1 à 8, **caractérisé en ce que** la flotte (12) comprend au moins un robot (16) roulant, chaque robot (16) roulant comprenant :
- un module (26) d'acquisition d'images d'au moins une portion de la surface à inspecter, et
- un module (28) de traitement des images acquises adapté pour fournir une information représentative de l'état de chaque portion de la surface inspectée, dite résultat du traitement.

10. 10 Procédé d'inspection automatique d'une surface d'un objet de type aéronef (54), véhicule de transport, bâtiment ou ouvrage d'art, ladite surface étant susceptible de présenter un défaut, comprenant :
- une étape d'acquisition d'images d'au moins une portion de la surface à inspecter par chaque robot volant (14, 14a, 14b, 14c) d'une flotte (12) de robots comprenant au moins un robot volant, et
- une étape de traitement des images acquises pour fournir une information représentative de l'état de chaque portion de surface inspectée, dite résultat du traitement,
- **caractérisé en ce qu'**il comprend une étape de détermination, à partir d'un modèle de la surface à inspecter, d'un ensemble d'instructions de déplacement et d'instructions d'acquisition d'images à chaque robot (14, 14a, 14b, 14c, 16) de la flotte (12).

## Patentansprüche

1. System zur automatischen Inspektion einer Oberfläche eines Objekts, z.B. eines Flugzeugs (54), eines Transportfahrzeugs, eines Gebäudes oder einer technischen Struktur, worin die Oberfläche einen Fehler enthalten kann, worin das System eine Flotte (12) umfasst, die mindestens einen Flugroboter (14, 14a, 14b, 14c) umfasst, worin jeder Flugroboter umfasst:
ein Modul (26) zur Erfassung von Bildern mindestens eines Teils der zu untersuchenden Oberfläche, und
ein Modul (28) zur Verarbeitung der erfassten Bilder, das geeignet ist, Informationen zu liefern, die für den Zustand jedes untersuchten Oberflächenteils repräsentativ sind, worin diese Informationen als Verarbeitungsergebnis bezeichnet werden,
**dadurch gekennzeichnet, dass** das automatische Inspektionssystem zudem ein Modul (18) zur Verwaltung der Roboterflotte (12) umfasst, worin das Verwaltungsmodul (18) geeignet ist, ausgehend von einem Modell der zu untersuchenden Oberfläche einen Satz von Anweisungen zur Versetzung und zur Bilderfassung für jeden Roboter (14, 14a, 14b, 14c, 16) der Flotte (12) zu bestimmen.

2. Automatisches Inspektionssystem nach Anspruch 1, **dadurch gekennzeichnet, dass** das Bilderfassungsmodul (26) mindestens eines Roboters der Flotte mindestens eine Kamera umfasst, die zur Erfassung von Bildern im sichtbaren Lichtspektrum geeignet ist.

3. Automatisches Inspektionssystem nach einem der Ansprüche 1 oder 2, **dadurch gekennzeichnet, dass** es eine Vorrichtung (20) zur Darstellung der Ergebnisse jedes Bearbeitungsvorgangs umfasst, der von jedem Bearbeitungsmodul (28) jedes Roboters (14, 14a, 14b, 14c, 16) der Flotte (12) durchgeführt wurde, und dass jeder Roboter (14, 14a, 14b, 14c, 16) der Flotte (12) ein Kommunikationsmodul (32) umfasst, das geeignet ist, die Ergebnisse jedes Bearbeitungsvorgangs an die Darstellungsvorrichtung (20) zu übertragen.

4. Automatisches Inspektionssystem nach Anspruch 2 und 3 in Kombination, **dadurch gekennzeichnet, dass** das Verwaltungsmodul (18) und die Darstellungsvorrichtung (20) in einem Steuergerät (60) angeordnet sind.

5. Automatisches Inspektionssystem nach Anspruch 4, **dadurch gekennzeichnet, dass** das Steuergerät (60) eine Mensch-Maschinen-Schnittstelle umfasst, die geeignet ist, ein 3D-Modell der zu untersuchenden Oberfläche anzuzeigen und eine Darstellung einer Position jedes Roboters der Flotte relativ zu der zu untersuchenden Oberfläche in Echtzeit anzuzeigen.

6. Automatisches Inspektionssystem nach einem der Ansprüche 1 bis 5, **dadurch gekennzeichnet, dass** jeder Roboter der Flotte ein Modul zur Standortbestimmung umfasst, das geeignet ist, jedes Verarbeitungsergebnis mit einem Standort des Verarbeitungsergebnisses relativ zu einem Koordinatensystem bezogen auf die zu untersuchende Oberfläche zu kombinieren.

7. Automatisches Inspektionssystem nach einem der Ansprüche 1 bis 6, **dadurch gekennzeichnet, dass** jeder Roboter (14, 14a, 14b, 14c, 16) der Flotte (12) ein Notfallmodul (30) umfasst, das geeignet ist, eine Fehlfunktion des Roboters zu erkennen, und dass der Roboter der Flotte (12) unter Verwendung eines Satzes von Notfallanweisungen, die in Abhängigkeit von einer Position des Roboters der Flotte (12) bezogen auf das Objekt bestimmt werden, in der Lage ist, im Falle einer Fehlfunktion mindestens eine Notfallanweisung auszuführen.

8. Automatisches Inspektionssystem nach einem der Ansprüche 1 bis 7, **dadurch gekennzeichnet, dass** jeder Roboter (14, 14a, 14b, 14c, 16) der Flotte (12) ein Hinderniserkennungsmodul umfasst, worin jeder Roboter (14, 14a, 14b, 14c, 16) der Flotte (12) in der Lage ist, eine Ausweichanweisung auszuführen, um mindestens ein vom Hinderniserkennungsmodul erkanntes Hindernis zu umgehen.

9. Automatisches Inspektionssystem nach einem der Ansprüche 1 bis 8, **dadurch gekennzeichnet, dass** die Flotte (12) mindestens einen Rollroboter (16) umfasst, worin jeder Rollroboter (16) umfasst:
ein Modul (26) zum Erfassen von Bildern mindestens eines Teils der zu untersuchenden Oberfläche, und
ein Modul (28) zur Verarbeitung der aufgenommenen Bilder, das geeignet ist, Informationen zu liefern, die für den Zustand jedes Teils der untersuchten Oberfläche repräsentativ sind und als Verarbeitungsergebnis bezeichnet werden.

10. Verfahren zur automatischen Inspektion einer Oberfläche eines Objekts, wie z.B. eines Flugzeugs (54), eines Transportfahrzeugs, eines Gebäudes oder einer technischen Struktur, worin die Oberfläche einen Defekt enthalten kann, wobei das Verfahren umfasst:
einen Schritt des Erfassens von Bildern mindestens eines Teils der zu untersuchenden Oberfläche durch jeden Flugroboter (14, 14a, 14b, 14c) einer Flotte (12) von Robotern, die mindestens einen Flugroboter umfasst, und
einen Schritt des Verarbeitens der erfassten Bilder, um Informationen zu liefern, die für den Zustand jedes untersuchten Oberflächenabschnitts repräsentativ sind, worin diese Informationen als Verarbeitungsergebnis bezeichnet werden,
**dadurch gekennzeichnet, dass** das Verfahren zudem umfasst:
einen Schritt des Bestimmens eines Satzes von Versetzungsanweisungen und Bilderfassungsanweisungen für jeden Roboter (14, 14a, 14b, 14c, 16) der Flotte (12), ausgehend von einem Modell der zu untersuchenden Oberfläche.

## Claims

1. System for automatically inspecting a surface of an object such as an aircraft (54), transport vehicle, building or engineering structure, said surface being liable to contain a defect, comprising a fleet (12) comprising at least one flying robot (14, 14a, 14b, 14c), each flying robot comprising:
- a module (26) for acquiring images of at least one portion of the surface to be inspected, and
- a module (28) for processing the acquired images, which module is suitable for providing information representative of the state of each inspected surface portion, which information is called the processing result,
**characterized in that** the automatic inspection system further comprises a module (18) for managing the fleet (12) of robots, the management module (18) being suitable for determining, from a model of the surface to be inspected, a set of displacement instructions and image acquisition instructions for each robot (14, 14a, 14b, 14c, 16) of the fleet (12).

2. Automatic inspection system according to claim 1, **characterised in that** the image acquisition module (26) of at least one robot of said fleet comprises at least one camera suitable for acquiring images within the visible light spectrum.

3. Automatic inspection system according to either claim 1 or claim 2, **characterised in that** it comprises a device (20) for presenting the results of each processing operation performed by each processing module (28) of each robot (14, 14a, 14b, 14c, 16) of the fleet (12), and **in that** each robot (14, 14a, 14b, 14c, 16) of the fleet (12) comprises a communication module (32) suitable for transmitting results of each processing operation to the presentation device (20).

4. Automatic inspection system according to claim 2 and claim 3 in combination, **characterised in that** the management module (18) and the presentation device (20) are arranged in a control device (60).

5. Automatic inspection system according to claim 4, **characterised in that** the control device (60) comprises a human-machine interface suitable for displaying a 3D model of the surface to be inspected and for displaying a representation of a position of each robot of the fleet relative to the surface to be inspected in real time.

6. Automatic inspection system according to any of claims 1 to 5, **characterised in that** each robot of the fleet comprises a location determination module, suitable for combining each processing result with a location of said processing result relative to a coordinate system with regard to the surface to be inspected.

7. Automatic inspection system according to any of claims 1 to 6, **characterised in that** each robot (14, 14a, 14b, 14c, 16) of the fleet (12) comprises an emergency module (30) suitable for detecting a robot malfunction and, using a set of emergency tasks determined according to a position of the robot of the fleet (12) relative to the object, said robot of the fleet (12) is capable of performing at least one emergency task in the event of a malfunction.

8. Automatic inspection system according to any of claims 1 to 7, **characterised in that** each robot (14, 14a, 14b, 14c, 16) of the fleet (12) comprises an obstacle detection module, whereby each robot (14, 14a, 14b, 14c, 16) of the fleet (12) is suitable for performing an avoidance task to avoid at least one obstacle detected by the obstacle detection module.

9. Automatic inspection system according to any of claims 1 to 8, **characterised in that** the fleet (12) comprises at least one rolling robot (16), each rolling robot (16) comprising:
- a module (26) for acquiring images of at least one portion of the surface to be inspected, and
- a module (28) for processing the acquired images, which module is suitable for providing information representative of the state of each portion of the inspected surface, which information is called the processing result.

10. Method for automatically inspecting a surface of an object such as an aircraft (54), transport vehicle, building or engineering structure, said surface being liable to contain a defect, comprising:
- a step of acquiring images of at least one portion of the surface to be inspected by each flying robot (14, 14a, 14b, 14c) of a fleet (12) of robots comprising at least one flying robot, and
- a step of processing the acquired images in order to provide information representative of the state of each inspected surface portion, which information is called the processing result,
**characterized in that** it further comprises :
- a step of determining, based on a model of the surface to be inspected, a set of displacement instructions and image acquisition instructions for each robot (14, 14a, 14b, 14c, 16) of the fleet (12).
